# EUROPEAN PATENT SPECIFICATION

(11) **EP 1 378 130 B1**
(45) Date of publication and mention of the grant of the patent: **11.06.2008**
(21) Application number: 02730126.6
(22) Date of filing: 08.04.2002
(51) Int. Cl.: H04Q 1/00

(54) **ROUTING A PAGING RESPONSE IN A MOBILE RADIO COMMUNICATIONS NETWORK TO A CORE NETWORK NODE**
ROUTING EINER PAGING-ANTWORT ZU EINEM KERNNETZKNOTEN IN EINEM MOBILFUNKKOMMUNIKATIONSNETZ
PROCEDE PERMETTANT LE ROUTAGE D'UNE REPONSE DE RADIOMESSAGERIE DANS UN RESEAU MOBILE

(30) Priority: 07.04.2001 EP 01108816
(43) Date of publication of application: 07.01.2004
(73) Proprietor: TELEFONAKTIEBOLAGET LM ERICSSON (publ), 164 83 Stockholm (SE)
(72) Inventor: TURINA, Klaus, 71522 Backnang (DE); NISKA, Hakan, S-589 35 Linköping (SE); TOIVANEN, Kyösti, Sakari, FIN-02400 Kirkkonummi (FI); ARVIDSSON, Ake, S-372 37 Ronneby (SE)
(74) Representative: Tonscheidt, Andreas
(86) International application number: PCT/EP2002/003887
(87) International publication number: WO 2002/082824

(56) References cited:
- WO-A-98/09457
- US-A- 6 091 953
- "Digital cellular telecommunications system (Phase 2+) (GSM);Universal Mobile Telecommunications System (UMTS); Intra-domain connection of Radio Access Network (RAN) nodes to multiple Core Network (CN) nodes (3GPP TS 23.228 version 5.2.0 Release 5) ETSI TS 123 236 V5.2.0 (2002-03)" ETSI TS 123 236 V5.2.0, XX, XX, March 2002 (2002-03), pages 1-36, XP002210729

## Description

### Field of invention

The invention relates to a method for routing a paging response in a network with pooled core network nodes, a mobile station and a radio access network node adapted to the method.

### Description of prior art

Mobile networks comprise radio access network nodes for connecting mobile stations to a core network and core network nodes that are responsible for routing calls towards mobile stations and that store subscriber data records related to mobile stations. In existing second and third generation networks, a hierarchical relation exists between core network nodes and radio access network nodes: each radio access network node is connected to one core network node.

For example for establishing a mobile terminating connection, a mobile station is paged by a core network node using a paging message. To the paging message, the mobile station replies with a paging response. In a hierarchical network the routing of the paging response in a radio network node is straightforward: The core network node sends the paging message towards the mobile station via the radio access network node and the mobile station responds with the paging response towards the radio access network node which routes the paging response to the one core network node it is connected to.

Among the possible characteristics of new second and third generation networks is the breaking up of the hierarchical relation between core network nodes and radio access network nodes according to the Pool Concept that is described in 3G TS 23.236 V2.1.0 of the 3^{rd} Generation Partnership Project. In order to reduce the number of changes of the core network node administrating the subscriber data record related to a roaming mobile station, in the Pool Concept the number of radio access network nodes via which a mobile station can be connected to a core network node is increased. To limit the number of subscriber data records administrated by one core network node, mobile stations that are connected to a radio access network node can be served by different core network nodes, i.e. mobile stations can be connected by one radio access network node to different core network nodes, which make up a pool of nodes. A radio access network node that is connectable to different core network nodes is described in the PCT application WO-A-98 09457 and in the US patent US-A-6 091 953.

To route a paging response in a radio access network node, at least one core network identifier is assigned to each core network node in the pool. When the core network node assigns a temporary mobile subscriber identity (TMSI) to a mobile station, one of the core network identifiers is chosen for the mobile station and the chosen core network identifier is included in the assigned TMSI. The radio access network nodes that are connected to a core network node hold look-up-tables relating the core network nodes that are connectable to the radio access network nodes to the core network identifiers.

A mobile station is paged using an identification of the mobile station and the mobile station has to respond with the same identification with which it has been paged. If the mobile station is paged using the TMSI, the mobile station responds with a paging response comprising the TMSI. The radio access network node receiving the paging response extracts the core network identifier from the TMSI and determines the core network node to which the core network identifier is assigned from its look-up-table. The radio access network node routes the paging response to the determined core network node.

In the state of the art, a correct routing of a paging response fails, if the relationship between core network nodes and core network identifiers is updated due to a reconfiguration of the network. Another situation in which the correct routing of a paging message fails is the case of unavailability of the TMSI in the core network node, e.g. due to a restart of the core network node. In this case the mobile station is paged using the international mobile subscriber identity (IMSI). The mobile station has to respond with the identification with which it has been paged, which is the IMSI in that case. In the state of the art, a radio access network node that receives a paging response comprising the IMSI cannot determine the core network node, which administrates the subscriber record of the sending mobile station and a correct routing of the paging response fails.

### Object of the invention

Therefore it is object of the invention to overcome the above disadvantages and to provide an improved method for routing a paging response in a radio access network node, which is adapted to the Pool Concept.

### Summary of the invention

This object is solved by the method of claim 1. The invention is also embodied in a Radio access network node according to claim 10 and a computer program unit according to claim 11. Advantageous embodiments are described in the dependent claims.

According to the present invention a mobile station is administrated by a core network node that pages the mobile station. The core network node sends a paging message towards the mobile station via a radio access network node. At least one further core network node is adapted to send a paging message via the radio access network node. The radio access network node receives the paging message that comprises a first identification of the mobile station and extracts the identification. The first identification of the mobile station is stored with an identification of the core network node in a database. Alternatively or in addition, a second identification of the mobile station can be derived from the first identification and the second identification can be stored with the identification of the core network node in the database. The identification of the core network node can for example be derived from the first or the second identification of the mobile station or from an address of the node in the message or from an address in underlying protocol layer or from the connection used for the paging message. The second identification can be derived from the first identification in the radio access network node or it can be derived in the core network node and transmitted to the radio access network node with the paging message and be extracted. It is not necessary that the second identification is part of the paging message itself but it can also be sent together with the paging message.

The paging message is sent from the radio access network node towards the mobile station. The mobile station is required to acknowledge the reception of the paging message with a paging response towards the radio access network node that comprises the first identification of the mobile station. Alternatively, the paging response can comprise the second identification of the mobile station or both the first and second identification. Also in the paging response, it is not necessary that the second identification is part of the response itself but it can also be sent together with the paging response. The second identification can be derived from the first identification in the mobile station or a second identification derived in the core network node or the radio access network node mobile is transmitted to the mobile station with the paging message. In the radio access network node, the identification of the core network node is retrieved according to the first or second identification of the mobile station from the database. The paging response is routed towards the core network node according to the retrieved identification.

The proposed method ensures a reliable routing of paging responses. It can be applied equally if the paging message comprises a permanent or a temporary identification of the mobile station. This is advantageous as the probability of a failure of the paging procedure is minimized. The proposed method can be used if the network has been reconfigured. This omits a further source of error of the paging procedure.

The probability of a failure of the paging procedure can be additionally lowered if the first identification of the mobile station identifies the mobile station uniquely to the at least two core network nodes.

The International Mobile Subscriber Identity or a Temporary Mobile Subscriber Identity are preferable first identifications of the mobile station.

If the protocol of the paging message and the paging response is directly accessible by the radio access network node and the first identification is transmitted in the paging response, the first identification of the mobile station can be extracted from the paging message and the paging response by the radio access network node. This is advantageous as it allows an easy implementation of the method.

The radio access network node can be a Base Station Controller for a Global System for Mobile Communications network.

If the second identification of the mobile station is transmitted as an information element of a protocol that is terminated by the mobile station and the radio access network node in the paging response, the second identification can easily be extracted from the information element, and the identification of the core network node can be retrieved according to the second identification. In this way, the second identification can be transmitted with the paging response although not in the message itself but in an underlying protocol. This is advantageous if the first identification is transmitted in the paging response on a protocol layer that is transparent, i.e. not directly accessible to the radio access network node.

The second identification can be derived from the first identification by a compression algorithm. This is advantageous to reduce memory requirements or if the bit size of the information element is smaller than the bit size of the first identification. The number of routing errors due to a compression of the first identification is negligible if the number of mobile stations for which a paging response is routed according to the proposed method within the period between the storage of the second identification and the reception of the paging response in the radio access network node is considerably lower than the range of values of the second identification.

The compression algorithm can comprise a selection of digits, a computation of a cross sum, and a conversion from a decimal to a binary representation. Any combination is also possible. A selection of digits is especially advantageous if the mobile stations can be distinguished based on the selected digits while other digits, e.g. a country code or network code, are typically identical for most mobile stations served by a radio access network node and can be discarded without loss of information. The computation of a cross sum is especially suited for a large compression ratio.

A Radio Network Controller for a Universal Mobile Telecommunication System network can be the radio access network node.

A Mobile Services Switching Centre/ Visitor Location Register can be the core network node in the proposed method.

A preferable radio access network node for a mobile network is provided with interfaces for sending and receiving messages, i.e. corresponding transmission and reception units. Especially, the radio access network node has interfaces to core network nodes and to base transceiver stations for connecting to mobile stations. The messages comprise a paging message for a mobile station from a first core network node of at least two core network nodes. The paging message comprises a first identification of the mobile station. The radio access network node is furthermore provided with a processing system adapted to send the paging message towards the mobile station and to receive a paging response from the mobile station over the corresponding interface. The paging response comprises the first identification or a second identification of the mobile station that is derived from the first identification.

The radio access network node has a memory for storing the first identification of the mobile station or the second identification of the mobile station with an identification of the core network node in a database. The first identification can be extracted from the paging message. If the second identification is stored, it is determined from the first identification either in the radio access network node or in the first core network node. The processing system is adapted to retrieve the identification of the core network node according to the first or the second identification of the mobile station from the database, and to route the paging response towards the first core network node. The radio access network node can be adapted to any embodiment of the described method.

A mobile station for a mobile network is provided with a unit for the transmission and reception of messages, e.g. a transceiver. The messages comprise a paging message for the mobile station from a first core network node of at least two core network nodes in the mobile network. The paging message comprises a permanent identification of the mobile station, e.g. the IMSI, and the mobile station has a processing system adapted to initiate a paging response to the paging message. As required by present GSM and UMTS specifications, the paging response comprises the permanent identification of the mobile station.

The processing system is also provided with a memory for storing a temporary identification of the mobile station transmitted by the first core network node, for example in a former message, e.g. in a former paging procedure or in an attachment procedure of the mobile station to the mobile network. The temporary identification preferably includes an identifier of the first core network node. The processing system is adapted to check before sending the paging response whether said temporary identification or at least the identifier of the first core network node is stored in the memory and, preferably, if it is still valid. If this is the case, the processing system is adapted to include the temporary identification or at least the identifier of the first core network node into an information element transmitted with the paging response. Especially, the information element can be included in an underlying protocol layer, which can be evaluated by a radio access network node forwarding the paging response to the first core network node. In this way, the information necessary for routing the paging response can be provided to the radio access network node, even if it is not included in the paging response itself. The mobile station can be adapted to any embodiment of the described method.

A program unit adapted for use in the proposed method is loadable into a radio access network node for a mobile network. The program unit can for example be stored on a data carrier, e.g. a magnetic or optical recording medium. It can also be embodied as a sequence of signals loadable into a radio access network node, e.g. over a data link. The program unit comprises code adapted to process messages, e.g. to extract the included information, said messages comprising a paging message for a mobile station from a first core network node of at least two core network nodes. The paging message comprises a first identification of the mobile station. Furthermore, the program unit is adapted to send the paging message towards the mobile station and to receive a paging response from the mobile station. The paging response comprises the first identification or a second identification of the mobile station that is derived from the first identification.

The program unit comprises code adapted to extract at least one of the identifications from the paging message or an underlying protocol layer and store the first identification of the mobile station or the second identification of the mobile station with an identification of the core network node in a database. If the second identification is stored, it is determined from the first identification either in the radio access network node or in the first core network node. The program unit is adapted to retrieve the identification of the core network node according to the first or the second identification of the mobile station from the database, and to route the paging response towards the first core network node. The code of the program unit can be written in any programming language. It is possible that at least some of the above functions are not executed by the program unit itself but are initiated by function calls to other program units in the radio access network node, e.g. an operating system. The program unit can be adapted to any embodiments of the described method.

### Brief description of the drawings

Fig. 1 shows an architecture of a mobile network for use of the proposed method.
Fig. 2 shows protocol layer in the mobile network of fig. 1.

### Detailed description of embodiments

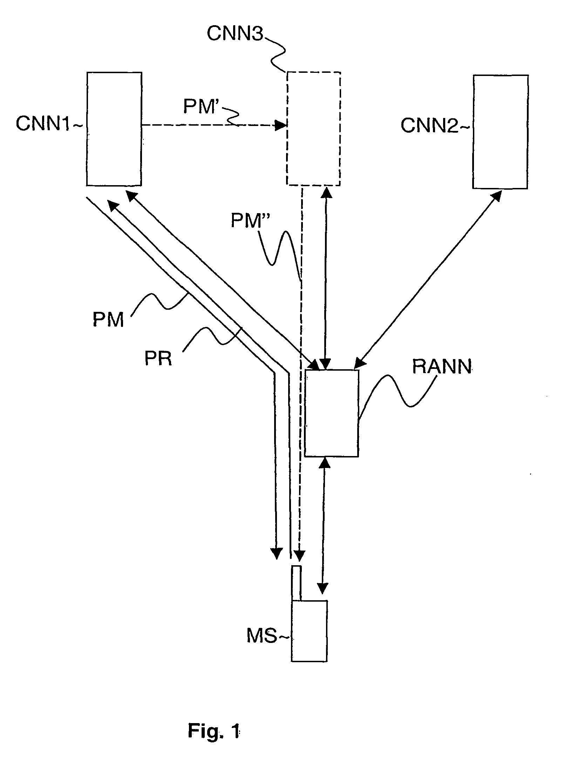

Figure 1 depicts core network nodes CNN1, CNN2 that are connected to a radio access network node RANN, which can provide connections to mobile stations MS. Possible connections between the core network nodes CNN1, CNN2 and the radio access network node RANN and between the radio access network node RANN and the mobile station MS are depicted as double headed arrows. Figure 1 further depicts a paging message PM that is sent from the core network node CNN1 to the mobile station via the radio access network node RANN and a paging response PR that is sent from the mobile station MS in reply to the core network node CNN1 via the radio access network node RANN, both paging message PM and response PR depicted as single headed arrows.

The core network nodes CNN1 and CNN2 can be for example MSC/VLRs (Mobile Services Switching Centre/Visitor Location Registers) for a GSM (Global System for Mobile Communications) network or a UMTS (Universal Mobile Telecommunication System) network. The radio access network node RANN can be for example a BSC (Base Station Controller) for a GSM (Global System for Mobile Communications) network or an RNC (Radio Network Controller) for a UMTS network.

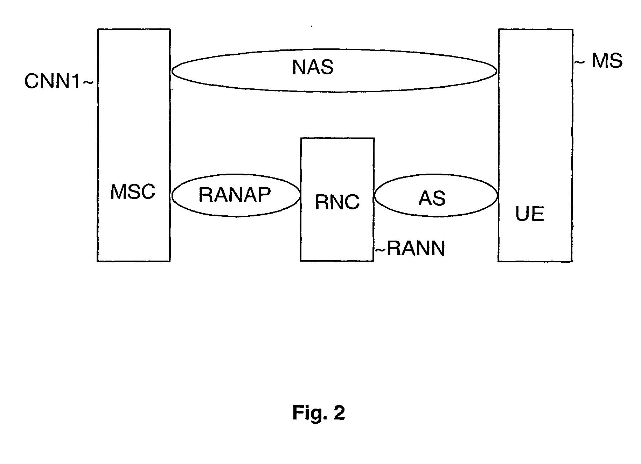

The core network node CNN1 sends the paging message PM via the radio access network node RANN towards the mobile station MS. The paging message comprises a first identification of the mobile station. The first identification can be a permanent identification of the mobile station like the IMSI (International Mobile Subscriber Identity) or a temporary identification of the mobile station like the TMSI (Temporary Mobile Subscriber Identity). Alternatively the paging message PM can comprise a permanent and a temporary identification of the mobile station. If the paging message PM is accessible by the radio access network node RANN, i.e. if the node can process the message content, the first identification can be extracted from the paging message by the radio access network node RANN. For example, a BSC according to GSM specifications can process layer 3 messages including the paging message. Alternatively, the first identification or the second identification can be transmitted as information that is related to the paging message in a protocol that is terminated by the radio access network node RANN. Examples are the RANAP (Radio Access Network Access Protocol) between the radio access network node and the core network node CNN1 (compare figure 2).

In an embodiment of the invention, it is possible that a packet switched connection between the mobile station MS and the radio access network node RANN is already established and controlled by a further core network node CNN3. As indicated by broken lines in figure 1, the paging can then be performed via the further core network node CNN3, for example an SGSN (serving GPRS support node). In this case, at first a message PM' is sent to the further core network node CNN3 to initiate the paging and the paging message PM" is then sent from the further core network node CNN3 towards the mobile station MS.

If the core network node CNN1, e.g. an MSC, pages the mobile station MS in this embodiment for a circuit switched connection, the paging message PM" can be inserted as PDU (packet data unit) that is transmitted via the packet switched connection. A control logic in the radio access network node RANN, for example a PCU (Packet Control Unit) extracts the PDU from the transmitted stream of packets, extracts the first or the second identification of the mobile station MS and an identification of the core network node CNN1 and stores the first or the second identification of the mobile station MS with the identification of the core network node CNN. If the PDU (packet data unit) comprises an address according to the Signaling System Number 7 as identification of the core network node CNN1, the address according to the Signaling System Number 7 is converted into an MSC address and the first or the second identification has to be stored with the MSC address. Alternatively, a logical address may be used.

In any embodiment, the radio access network node RANN receives the paging message PM, PM" for the mobile station MS. The radio access network node RANN stores the received identification of the mobile station MS with an identification of the core network node CNN1 in a database. If the paging message comprises a permanent and a temporary identification of the mobile station, both identifications can be stored. A database which enables to store a triplet of a permanent identification of the mobile station, a temporary identification of the mobile station and an identification of the core network node is especially advantageous if the memory structures for the identifications are different and if a possibility to store both the permanent and the temporary identification shall be foreseen.

Alternatively a second identification of the mobile station can be derived from the first identification and the second identification of the mobile station MS can be stored with the identification of the core network node CNN1 in the database. The second identification can be derived for example by a compression algorithm, either in the radio access network node or in the core network node. As an example of a compression algorithm, if the IMSI (International Mobile Subscriber Identity) is used as the first identification of the mobile station MS the first four digits and the last digit of the IMSI can be discarded and the remaining decimal digits can be converted into a binary number. The IMSI is composed of the MCC (Mobile Country Code), the MNC (Mobile Network Code), and MSIN (Mobile Subscriber Identification Number). The MCC (Mobile Country Code) and the MNC (Mobile Network Code) will typically be identical for the majority of the mobile stations that are connected to the radio access network node and can be discarded without a severe loss of information. Therefore in a further example of a compression algorithm, if the IMSI is used as the first identification of the mobile station MS, the MSIN can be extracted from the IMSI, a cross sum of the MSIN can be computed and the cross sum can be converted into a binary number, which can be used as second identification of the mobile station MS. Alternatively the MSIN can be converted into a hexadecimal number, a cross sum can be computed from the hexadecimal number, and a binary representation of this cross sum can be used as second identification of the mobile station MS. The computation of a cross sum means a high compression but introduces an ambiguity of the second identification. Routing errors due to the ambiguity can however be avoided if the number paging responses that are routed according to the proposed method within the period between the storage of the second identification and the reception of the paging response in the radio access network node is considerably lower than the range of values of the second identification.

In an advantageous embodiment of the invention the first identification of the mobile station MS, respectively the second identification derived from the first one, is only stored in the database, if the first identification of the mobile station MS is a permanent identification of the mobile station MS. In this way, the number of paging responses that are routed according to the proposed method can be lowered and the processing load as well as the storage requirements for the radio access network are decreased.

The radio access network node RANN sends the paging message PM, PM" towards the mobile station MS. The mobile station responds with a paging response PR towards the radio access network node RANN. The response comprises the first and, optionally, the second identification of the mobile station. If the paging response is accessible by the radio access network node RANN, for example as a layer 3 message, the first and second identification can be extracted from the paging response PR by the radio access network node RANN. Alternatively, the first identification or the second identification can be transmitted as information that is related to the paging response PR in a protocol that is terminated by the radio access network node RANN and the mobile station MS, for example over the AS (Access Stratum) comprising lower protocol layers (see figure 2).

The radio access network node RANN retrieves the identification of the core network node CNN1 according to the first or second identification and routes the paging response PR towards the core network node CNN1. Generally, the paging response will be routed directly to the core network node CNN1, regardless whether the paging message PM, PM" was sent directly or via a further core network node CNN3. If the identification is not found in the database, the paging response can nonetheless be sent to a core network node because the radio access network node is generally not adapted to reply to the response. The core network node is then for example selected arbitrarily or by an algorithm, e.g. for load sharing among the core network nodes. In this case, the mobile station MS is generally disconnected by the core network node receiving the response.

If the second identification is transmitted as information related to the paging response over a protocol that is terminated by the radio access network node RANN and the mobile station MS, and if the bit size of the information element in said protocol is smaller than the bit size of the first identification of the mobile station MS, the second identification of the mobile station MS can be derived from the first identification of the mobile station by a compression algorithm. The radio access network node RANN retrieves the identification of the core network node CNN1 according to the second identification.

In a further embodiment, if the mobile station MS has a valid TMSI (Temporary Mobile Subscriber Identity) available, the mobile station can determine the information element in the underlying protocol layer according to the TMSI, even if the paging response comprises the IMSI as identification of the mobile station. Preferably, at least the core network node identifier from the TMSI is included in the information element. As a result, the identification of the mobile station in the information element is not derived from the identification used both in the paging message and the paging response but from the TMSI stored in the mobile station after being transmitted in a message preceding the paging message. Then the identity of the core network node CNN1 can be retrieved in the radio access network node according to the information element and the paging response can be routed to the core network node CNN1. If the core network node identifier from the TMSI is included in the information element, the retrieval of the identification of the core network node CNN1 in the database has only to be performed if the mobile station MS has no valid TMSI available. If no valid TMSI is available, the information element can be determined according to the IMSI.

The above embodiments admirably achieve the object of the invention. However, it will be appreciated that departures can be made by those skilled in the art without departing from the scope of the invention, which is limited only by the claims.

## Claims

1. Method for routing a paging response (PR) of a mobile station (MS) in a radio access network node (RANN) of a mobile network, wherein at least two core network nodes (CNN1; CNN2) are adapted to send a paging message towards the mobile station (MS), and wherein the following steps are performed:
- receiving a paging message (PM) in the radio access network node (RANN) for a mobile station (MS) from one of the core network nodes (CNN1), the paging message (PM) comprising a first identification of the mobile station (MS),
- deriving a second identification of the mobile station (MS) from the first identification by a compression algorithm,
- storing the second identification of the mobile station (MS) that is derived from the first identification with an identification of the one of the core network nodes (CNN1) in a database,
- sending the paging message towards the mobile station (MS),
- receiving a paging response (PR) from the mobile station (MS), the paging response (PR) comprising the second identification of the mobile station (MS),
- retrieving the identification of the one of the core network nodes (CNN1) according to the second identification of the mobile station (MS) from the database , and
- routing the paging response towards the one of the core network nodes (CNN1),

2. Method according to claim 1, wherein the first identification of the mobile station (MS) identifies the mobile station (MS) uniquely within the at least two core network nodes (CNN1; CNN2).

3. Method according to claim 2, wherein the first identification of the mobile station (MS) is an International Mobile Subscriber Identity or a Temporary Mobile Subscriber Identity.

4. Method according to any of the claims 1 to 3, wherein the protocol of the paging message (PM) and the paging response (PR) is accessible by the radio access network node (RANN), the first identification is transmitted in the paging response (PR), and the first identification of the mobile station (MS) is extracted from the paging message (PM) and the paging response (PR) by the radio access network node (RANN).

5. Method according to any preceding claim, wherein the radio access network node (RANN) is a Base Station Controller for a Global System for Mobile Communications network.

6. Method according to any of the claims 1 to 3, wherein the second identification of the mobile station (MS) is transmitted as an information element of a protocol that is terminated by the mobile station (MS) and the radio access network node (RANN) in the paging response (PR), the second identification is extracted from the information element, and the identification of the core network node (CNN1) is retrieved according to the second identification.

7. Method according to claim 1, wherein the compression algorithm comprises at least one item from a group consisting of a selection of digits, a computation of a cross sum, and a conversion from a decimal to a binary representation.

8. Method according to any of the claims 1- 3 and 6- 7, wherein the radio access network node (RANN) is a Radio Network Controller for a Universal Mobile Telecommunication System network.

9. Method according to any of the claims 1 to 8, wherein the core network node is a Mobile Services Switching Centre/ Visitor Location Register.

10. Radio access network node for a mobile network, wherein the radio access network node (RANN) is provided with interfaces for sending and receiving messages, said messages comprising a paging message (PM) for a mobile station (MS) from a first core network node (CNN1) of at least two core network nodes (CNN1; CNN2), the paging message (PM) comprising a first identification of the mobile station (MS), wherein the radio access network node (RANN) is provided with a processing system adapted to send the paging message towards the mobile station (MS) and to receive a paging response (PR) from the mobile station (MS), **characterized in that** the processing system is adapted to derive a second identification from the first identification by a compression algorithm, the radio access network node (RANN) is provided with a memory for storing the second identification of the mobile station (MS) with an identification of the first core network node (CNN1) in a database, the paging response (PR) comprises the second identification of the mobile station (MS) that is derived from the first identification and the processing system is adapted to retrieve the identification of the first core network node (CNN1) according to the second identification of the mobile station (MS) from the database, and to route the paging response towards the first core network node (CNN1).

11. Program unit loadable into a radio access network node for a mobile network, wherein the program unit comprises code adapted to process messages, said messages comprising a paging message (PM) for a mobile station (MS) from a first core network node (CNN1) of at least two core network nodes (CNN1; CNN2), the paging message (PM) comprising a first identification of the mobile station (MS), and wherein the program unit comprises code adapted to send the paging message towards the mobile station (MS), **characterized in that**
the program unit comprises code adapted to derive a second identification from the first identification by a compression algorithm and to store the second identification of the mobile station (MS) with an identification of the first core network node (CNN1) in a database, to receive a paging response (PR) from the mobile station (MS), the paging response (PR) comprising the second identification of the mobile station (MS) that is derived from the first identification and the program unit comprises code adapted to retrieve the identification of the first core network node (CNN1) according to the second identification of the mobile station (MS) from the database, and to route the paging response towards the first core network node (CNN1).

## Patentansprüche

1. Verfahren zum Leiten einer Funkrufantwort (PR) einer Mobilstation (MS) in einem Funkzugriffsnetz-Knoten (RANN) eines Mobilfunknetzes, wobei mindestens zwei Kernnetzknoten (CNN1; CNN2) dazu eingerichtet sind, eine Funkrufnachricht zu der Mobilstation (MS) zu senden, und wobei die folgenden Schritte ausgeführt werden:
- Empfangen einer Funkrufnachricht (PM) in dem Funkzugriffsnetz-Knoten (RANN) für eine Mobilstation (MS) von einem der Kernnetzknoten (CNN1), wobei die Funkrufnachricht (PM) eine erste Kennung der Mobilstation (MS) umfasst,
- Ableiten einer zweiten Kennung der Mobilstation (MS) aus der ersten Kennung durch einen Kompressionsalgorithmus,
- Speichern der zweiten Kennung der Mobilstation (MS), welche aus der ersten Kennung abgeleitet wurde, mit einer Kennung des einen der Kernnetzknoten (CNN1) in einer Datenbank,
- Senden der Funkrufnachricht zu der Mobilstation (MS),
- Empfangen einer Funkrufantwort (PR) von der Mobilstation (MS), wobei die Funkrufantwort (PR) die zweite Kennung der Mobilstation (MS) umfasst,
- Abrufen der Kennung des einen der Kernnetzknoten (CNN1) entsprechend der zweiten Kennung der Mobilstation (MS) aus der Datenbank, und
- Leiten der Funkrufantwort zu dem einen der Kernnetzknoten (CNN1).

2. Verfahren nach Anspruch 1, wobei die erste Kennung der Mobilstation (MS) die Mobilstation (MS) eindeutig innerhalb der mindestens zwei Kernnetzknoten (CNN1; CNN2) identifiziert.

3. Verfahren nach Anspruch 2, wobei die erste Kennung der Mobilstation (MS) eine Internationale Mobilfunk-Teilnehmerkennung (International Mobile Subscriber Identity) oder eine Temporäre Mobilfunk-Teilnehmerkennung (Temporary Mobile Subscriber Identity) ist.

4. Verfahren nach einem der Ansprüche 1 bis 3, wobei auf das Protokoll der Funkrufnachricht (PM) und der Funkrufantwort (PR) durch den Funkzugriffsnetz-Knoten (RANN) zugegriffen werden kann, die erste Kennung in der Funkrufantwort (PR) übertragen wird und die erste Kennung der Mobilstation (MS) aus der Funkrufnachricht (PM) und der Funkrufantwort (PR) durch den Funkzugriffsnetz-Knoten (RANN) extrahiert wird.

5. Verfahren nach einem der vorhergehenden Ansprüche, wobei der Funkzugriffsnetz-Knoten (RANN) eine Basisstationssteuerung (Base Station Controller) für ein Global System for Mobile Communications Netz ist.

6. Verfahren nach einem der Ansprüche 1 bis 3, wobei die zweite Kennung der Mobilstation (MS) als ein Informationselement eines Protokolls übertragen wird, welches durch die Mobilstation (MS) und den Funkzugriffsnetz-Knoten (RANN) in der Funkrufantwort (PR) beendet wird, die zweite Kennung aus dem Informationselement extrahiert wird und die Kennung des Kernnetzknotens (CNN1) entsprechend der zweiten Kennung abgerufen wird.

7. Verfahren nach Anspruch 1, wobei der Kompressionsalgorithmus mindestens ein Element aus einer Gruppe umfasst, die aus einer Wahl von Ziffern, einer Berechnung einer Quersumme und einer Umwandlung aus einer Dezimal- in eine Binärdarstellung besteht.

8. Verfahren nach einem der Ansprüche 1-3 und 6-7, wobei der Funkzugriffsnetz-Knoten (RANN) eine Funknetzsteuerung (Radio Network Controller) für ein Universal Mobile Telecommunication System Netz ist.

9. Verfahren nach einem der Ansprüche 1 bis 8, wobei der Kernnetzknoten eine Mobilfunkvermittlungsstelle (Mobile Services Switching Centre) / Besucherregister (Visitor Location Register) ist.

10. Funkzugriffsnetz-Knoten für ein Mobilfunknetz, wobei der Funkzugriffsnetz-Knoten (RANN) mit Schnittstellen zum Senden und Empfangen von Nachrichten ausgestattet ist, wobei die Nachrichten eine Funkrufnachricht (PM) für eine Mobilstation (MS) von einem ersten Kernnetzknoten (CNN1) von mindestens zwei Kernnetzknoten (CNN1; CNN2) umfassen, wobei die Funkrufnachricht (PM) eine erste Kennung der Mobilstation (MS) umfasst, wobei der Funkzugriffsnetz-Knoten (RANN) mit einem Verarbeitungssystem ausgestattet ist, das dazu eingerichtet ist, die Funkrufnachricht zu der Mobilstation (MS) zu senden und eine Funkrufantwort (PR) von der Mobilstation (MS) zu empfangen, **dadurch gekennzeichnet, dass** das Verarbeitungssystem dazu eingerichtet ist, durch einen Kompressionsalgorithmus eine zweite Kennung aus der ersten Kennung abzuleiten, der Funkzugriffsnetz-Knoten (RANN) mit einem Speicher zum Speichern der zweiten Kennung der Mobilstation (MS) mit einer Kennung des ersten Kernnetzknotens (CNN1) in einer Datenbank ausgestattet ist, die Funkrufantwort (PR) die zweite Kennung der Mobilstation (MS) umfasst, welche aus der ersten Kennung abgeleitet ist, und das Verarbeitungssystem dazu eingerichtet ist, die Kennung des ersten Kernnetzknotens (CNN1) entsprechend der zweiten Kennung der Mobilstation (MS) aus der Datenbank abzurufen und die Funkrufantwort zu dem ersten Kernnetzknoten (CNN1) zu leiten.

11. Programmeinheit, die in einen Funkzugriffsnetz-Knoten für ein Mobilfunknetz ladbar ist, wobei die Programmeinheit Code umfasst, der dazu eingerichtet ist, Nachrichten zu verarbeiten, wobei die Nachrichten eine Funkrufnachricht (PM) für eine Mobilstation (MS) von einem ersten Kernnetzknoten (CNN1) von mindestens zwei Kernnetzknoten (CNN1; CNN2) umfassen, wobei die Funkrufnachricht (PM) eine erste Kennung der Mobilstation (MS) umfasst und wobei die Programmeinheit Code umfasst, der dazu eingerichtet ist, die Funkrufnachricht zu der Mobilstation (MS) zu senden, **dadurch gekennzeichnet, dass** die Programmeinheit Code umfasst, der dazu eingerichtet ist, durch einen Kompressionsalgorithmus eine zweite Kennung aus der ersten Kennung abzuleiten und die zweite Kennung der Mobilstation (MS) mit einer Kennung des ersten Kernnetzknotens (CNN1) in einer Datenbank zu speichern, eine Funkrufantwort (PR) von der Mobilstation (MS) zu empfangen, wobei die Funkrufantwort (PR) die zweite Kennung der Mobilstation (MS) umfasst, welche aus der ersten Kennung abgeleitet ist, und die Programmeinheit Code umfasst, der dazu eingerichtet ist, die Kennung des ersten Kernnetzknotens (CNN1) entsprechend der zweiten Kennung der Mobilstation (MS) aus der Datenbank abzurufen und die Funkrufantwort zu dem ersten Kernnetzknoten (CNN1) zu leiten.

## Revendications

1. Procédé pour router une réponse de radiorecherche (PR) d'une station mobile (MS) dans un noeud de réseau d'accès radio (RANN) d'un réseau mobile, dans lequel au moins deux noeuds de réseau central (CNN1 ;CNN2) sont adaptés afin d'envoyer un message de radiorecherche vers la station mobile (MS) et dans lequel les étapes suivantes sont effectuées :
- recevoir un message de radiorecherche (PM) dans le noeud de réseau d'accès radio (RANN) d'une station mobile en provenance d'un des noeuds de réseau central (CNN1), le message de radiorecherche (PM) comprenant une première identification de la station mobile (MS),
- déduire une seconde identification de la station mobile (MS) à partir de la première identification par un algorithme de compression,
- mémoriser la seconde identification de la station mobile (MS) qui est déduite de la première identification avec une identification d'un des noeuds de réseau central (CNN1) dans une base de données,
- envoyer le message de radiorecherche vers la station mobile (MS),
- recevoir une réponse de radiorecherche (PR) provenant de la station mobile (MS), la réponse de radiorecherche (PR) comprenant la seconde identification de la station mobile (MS),
- extraire de la base de données l'identification d'un des noeuds de réseau central (CNN1) en fonction de la seconde identification de la station mobile (MS), et
- router 1a réponse de radiorecherche vers un des noeuds de réseau central (CNN1) .

2. Procédé selon 1a revendication 1, dans lequel 1a première identification de 1a station mobile (MS) identifie 1a station mobile (MS) de manière unique à l'intérieur d'au moins deux noeuds de réseau central (CNN1 ;CNN2).

3. Procédé selon 1a revendication 2, dans lequel 1a première identification de 1a station mobile (MS) est une identité internationale d'abonné mobile ou une identité temporaire d'abonné mobile.

4. Procédé selon une quelconque des revendications 1 à 3, dans lequel le protocole du message de radiorecherche (PM) et de la réponse de radiorecherche (PR) est accessible par le noeud de réseau d'accès radio (RANN), la première identification est transmise dans la réponse de radiorecherche (PR) et la première identification de la station mobile (MS) est extraite du message de radiorecherche (PM) et de la réponse de radiorecherche (PR) par le noeud de réseau d'accès radio (RANN).

5. Procédé selon une quelconque des revendications précédentes, dans lequel le noeud de réseau d'accès radio (RANN) est un contrôleur de station de base d'un réseau GSM (système global de télécommunication avec les mobiles).

6. Procédé selon une quelconque des revendications 1 à 3, dans lequel la seconde identification de la station mobile (MS) est transmise comme un élément d'information d'un protocole qui aboutit à la station mobile (MS) et au noeud de réseau d'accès radio (RANN) dans la réponse de radiorecherche (PR), la seconde identification est extraite de l'élément d'information et l'identification du noeud de réseau central (CNN1) est extraite en fonction de la seconde identification.

7. Procédé selon la revendication 1, dans lequel l'algorithme de compression comprend au moins un élément d'un groupe consistant en une sélection de chiffres, un calcul informatique d'une somme croisée et une conversion d'une représentation décimale à binaire.

8. Procédé selon une quelconque des revendications 1-3 et 6-7, dans lequel le noeud de réseau d'accès radio (RANN) est un contrôleur de radioréseau d'un système UMTS (système universel de télécommunication avec les mobiles).

9. Procédé selon une quelconque des revendications 1 à 8, dans lequel me noeud de réseau central est un centre de commutation pour les services mobiles/registre de localisation visiteur.

10. Noeud de réseau d'accès radio d'un réseau mobile, dans lequel le noeud de réseau d'accès radio (RANN) est pourvu d'interfaces pour envoyer et recevoir des messages, lesdits messages comprenant un message de radiorecherche (PM) d'une station mobile (MS) provenant d'un premier noeud de réseau central (CNN1) d'au moins deux noeuds de réseau central (CNN1 ;CNN2), le message de radiorecherche (PM) comprenant une première identification de la station mobile (MS), dans lequel le noeud de réseau d'accès radio (RANN) est pourvu d'un système de traitement adapté afin d'envoyer le message de radiorecherche vers la station mobile (MS) et de recevoir une réponse de radiorecherche (PR) provenant de 1a station mobile (MS), **caractérisé en ce que** le système de traitement est adapté afin de déduire une seconde identification de la première identification par un algorithme de compression, le noeud de réseau d'accès radio (RANN) est pourvu d'une mémoire pour mémoriser la seconde identification de la station mobile (MS) avec une identification du premier noeud de réseau central (CNN1) dans une base de données, la réponse de radiorecherche (PR) comprend la seconde identification de la station mobile (MS) qui est déduite de la première identification et le système de traitement est adapté afin d'extraire de la base de données l'identification du premier noeud de réseau central (CNN1) en fonction de la seconde identification de la station mobile (MS) et de router la réponse de radiorecherche vers la premier noeud de réseau central (CNN1).

11. Unité de programme chargeable dans un noeud de réseau d'accès radio d'un réseau mobile, dans lequel l'unité de programme comprend du code adapté afin de traiter des messages, lesdits messages comprenant un message de radiorecherche (PM) d'une station mobile (MS) provenant d'un premier noeud de réseau central (CNN1) d'au moins deux noeuds de réseau central (CNN1 ;CNN2), le message de radiorecherche (PM) comprenant une première identification de la station mobile (MS) et dans lequel l'unité de programme comprend du code adapté afin d'envoyer le message de radiorecherche vers la station mobile (MS), **caractérisé en ce que**
l'unité de programme comprend du code adapté afin de déduire une seconde identification de la première identification par un algorithme de compression et de mémoriser la seconde identification de la station mobile (MS) avec une identification du premier noeud de réseau central (CNN1) dans une base de données, de recevoir une réponse de radiorecherche (PR) provenant de la station mobile (MS), la réponse de radiorecherche (PR) comprenant la seconde identification de la station mobile (MS) qui est déduite de la première identification et l'unité de programme comprend du code adapté afin d'extraire de la base de données l'identification du premier noeud de réseau central (CNN1) en fonction de la seconde identification de la station mobile (MS), et de router la réponse de radiorecherche vers le premier noeud de réseau central (CNN1) .
